# EUROPÄISCHE PATENTSCHRIFT

(11) **EP 1 418 367 B1**
(45) Veröffentlichungstag und Bekanntmachung des Hinweises auf die Patenterteilung: **05.12.2007**
(21) Anmeldenummer: 03103903.5
(22) Anmeldetag: 22.10.2003
(51) Int. Cl.: F16J 15/12, F16J 15/10, F16L 23/18, F16L 23/22

(54) **Flachdichtungsring**
Annular gasket
Joint annulaire plat

(30) Priorität: 09.11.2002 DE 10252141
(43) Veröffentlichungstag der Anmeldung: 12.05.2004
(73) Patentinhaber: ProMinent Dosiertechnik GmbH, 69123 Heidelberg (DE)
(72) Erfinder: Weisbrodt, Rainer, 68549 Ilvesheim (DE); Bubb, Alexander, Dr., 68723 Schwetzingen (DE); Braun, Josef, 68766 Hockenheim (DE)
(74) Vertreter: Weber, Roland

(56) Entgegenhaltungen:
- DE-U- 29 707 063
- GB-A- 919 101
- GB-A- 1 134 096
- GB-A- 2 375 149
- US-A- 2 859 061
- US-A- 3 775 832

## Beschreibung

Die Erfindung betrifft einen Flachdichtungsring für die Herstellung einer fluiddichten Verbindung von zwei mit einer Anpreßkraft gegeneinander abzudichtenden Flanschen, wobei der Ring einen elastisch verformbaren Grundring aufweist. Spezieller betrifft die Erfindung einen Flachdichtungsring mit Rückstellvermögen und definierter Verpressung, der sich in einer besonderen Ausgestaltung mit Vorteil in der chemischen, petrochemischen und Nahrungsmittelindustrie einsetzen läßt, wenn er mit einer chemisch beständigen und/oder gesundheitlich unbedenklichen Oberflächenlage versehen ist.

Hochbelastbare Flachdichtungen bzw. Flachdichtungsringe werden in der Apparate-, Pumpen- und Rohrleitungstechnik zur Herstellung von fluiddichten Verbindungen eingesetzt. Die Flachdichtungsringe werden entweder durch eine Drehbewegung um die Mittelachse des Dichtungsrings, wie zum Beispiel Gewindeverschraubungen von Ventilkörpern in Rohleitungen oder Pumpengehäusen, oder durch Druckbewegungen senkrecht zur Dichtungsringebene, d.h. parallel zur Achse des Dichtungsrings, zum Beispiel bei Flanschverbindungen zwischen zwei Rohrleitungsstücken, verpreßt. Durch das Verpressen wird ein fester, enger Kontakt zwischen dem Dichtungsmaterial und den zwei fluiddicht miteinander zu verbindenden Teilen gewährleistet.

Bekannt sind Flachdichtungen aus reinem PTFE (Polytetrafluorethylen), die vor allem in der chemischen, petrochemischen und Nahrungsmittelindustrie wegen ihrer chemischen Beständigkeit und gesundheitlichen Unbedenklichkeit verwendet werden. Ein Nachteil dieser Dichtungen besteht darin, daß das PTFE-Material nicht elastisch ist und daher keine Rückstellkraft besitzt. Diese Dichtungen aus reinem PTFE oder einem anderem nicht elastischen Material können daher grundsätzlich nur einmal verwendet werden. Wenn eine Rückstellkraft ausdrücklich verlangt wird oder wenn die fluiddichte Verbindung zwischen zwei Teilen des öfteren geöffnet werden muß, können derartige Dichtungen überhaupt nicht verwendet werden. PTFE-Dichtungen lassen sich nur begrenzt verpressen und neigen zum "Fließen", so daß die Anzugsmomente einer Verschraubung bzw. die Kraft, mit der das Verpressen ursprünglich erfolgte, nach einer gewissen Betriebsdauer nachlassen. Dadurch kann im Laufe der Zeit auch dann eine Undichtigkeit eintreten, wenn die Dichtung nur einmal verpreßt und anschließend nicht erneut gelöst wird.

Aus der DE 299 09 268 U und der DE 299 09 270 U sind Flachdichtungsringe bekannt, mit denen versucht wird, die Nachteile reiner PTFE-Flachdichtungen zu überwinden. Die Dichtungsringe bestehen im wesentlichen aus zwei PTFE-Lagen, die im Bereich der Verpressung dazwischen eine Hülle bzw. Tasche ausbilden, in der ein Ring aus einer senkrecht zur Ringebene gewellten Metallfolie vorgesehen ist. Alternativ ist in der PTFE-Hülle bzw. PTFE-Tasche eine Einlage aus einem elastischen Material vorgesehen. Beim Verpressen der Dichtungen mit Metallwellenringeinlage werden die Metallwellen unter der Kraft der Verpressung flachgedrückt. Diese Art von Dichtungen gewährleistet das Anziehen bzw. Verpressen mit vorgeschriebenen Anzugsmomenten und eine auf Dauer sichere Dichtwirkung. Dichtungen mit Metallwellenringeinlage sind jedoch bei Kunststoffverschraubungen nur begrenzt einsetzbar, da die Dichtung für das Kunststoffmaterial in der Regel zu hart ist. Für Kunststoffverschraubungen besser geeignet sind in dem Fall die Dichtungen mit einer Einlage aus einem elastischen Material, die bei den bekannten Dichtungen lose in die PTFE-Hülle eingelegt sind. Es hat sich jedoch gezeigt, daß sich die Einlage aus elastischem Material beim Anziehen von Gewindeverschraubungen durch Drehbewegung einseitig aus der PTFE-Hülle nach außen herausdrückt und die PTFE-Hülle wegrutscht. Eine sichere Dichtung der Verschraubung kann daher nicht garantiert werden. Auch verklemmt häufig die herausgedrückte Einlage aus elastischem Material das Gewinde der Verschraubung, was dessen Anziehen und Wartung zusätzlich erschwert.

Die DE 198 46 475 A1 beschreibt einen weiteren Flachdichtungsring, bei dem ein Grundring aus einem elastischen Material mit einer Schutzfolie aus PTFE überzogen ist. Das elastische Material und die PTFE-Schutzfolie sind so miteinander verbunden, daß sich das elastische Material beim Verpressen dieser Dichtung nicht mehr herausdrückt. Die Dichtung hat jedoch den Nachteil, daß sie über eine lange Betriebsdauer keine konstante Flächenpressung bzw. Dichtungskraft gewährleistet, da die Anzugskräfte bzw. Anpreßkräfte direkt und vollständig von dem mit PTFE-Schutzfolie überzogenen Ring aus elastischem Material aufgenommen werden (Krafthauptschluß). Dadurch kann es leicht zu einer zu starken Verpressung der Dichtung kommen. Die Dichtung wird leicht zu stark zerdrückt und bleibend verformt, wodurch die Dichtung für eine erneute Verwendung ungeeignet wird bzw. die Dichtwirkung nach Öffnen und erneutem Verpressen der Dichtung verlorengeht.

Die US-A-3,775,832 beschreibt einen Dichtungsring, der aus einer ringförmigen Scheide aus festem, hartem und nicht dehnbarem Fluorpolymer und einem in dieser Scheide vorgesehenen flachen Ringkern aus elastomerem Material besteht, wobei sich die ringförmige Scheide auch über den inneren Umfangsrand des elastomeren Ringkems erstreckt. Auch hier kann es leicht dazu kommen, daß die Dichtung zu stark zerdrückt und bleibend verformt wird, wodurch die Dichtung für eine erneute Verwendung ungeeignet wird bzw. die Dichtwirkung nach Öffnen und erneutem Verpressen der Dichtung verlorengeht.

In der US-A-2,859,061 wird ein zusammengesetzter Dichtungsring beschrieben, der einen komprimierbaren ringförmigen Kern aus elastomerem Material aufweist, um den eine flexible, ringförmige Schutzhülle angeordnet ist, die beispielsweise aus PTFE hergestellt sein kann und deren marginale Enden eine Lippe bilden. Da der Kern lose in der Hülle sitzt und keine feste Verbindung zwischen den beiden Bauteilen vorliegt, kann es bei der Verwendung solcher Dichtungen bei der Abdichtung von Gewindeverschraubungen durch die Drehbewegung dazu kommen, daß Verschiebungen zwischen Kern und Hülle auftreten, die sich nachteilig auf die Dichtwirkung auswirken.

Die DE 297 07 063 betrifft eine Flanschdichtung mit einem elastischen Grundkörper sowie einem starren Versteifungselement. Der elastische Grundkörper dieser Flanschdichtung ist mit einer Beschichtung aus Polytetrafluorethylen (PTFE) versehen, wobei die Beschichtung zumindest die Dichtflächen und die nach innen weisende Fläche des Grundkörpers bedeckt. Der Grundkörper dieser Flanschdichtung besteht vorzugsweise aus Elastomer und das Versteifungselement vorzugsweise aus Stahl. Bei Flanschdichtungen dieser Art kommt die Dichtfunktion allein dem beschichteten elastischen Grundring zu, was u.U. nachteilig sein kann.

Der vorliegenden Erfindung liegt daher die Aufgabe zugrunde, einen gegenüber dem Stand der Technik, insbesondere einen gegenüber dem in der US-A-2,859,061 beschrieben Dichtungsring, verbesserten Flachdichtungsring bereitzustellen, mit dem sich sowohl Gewindeverschraubungen als auch Flanschverbindungen sicher abdichten lassen, der mehrmals verwendbar ist und bei dem die Verpressung unter vorgegebenen Anzugsmomenten vorgenommen werden kann.

Diese Aufgabe wird erfindungsgemäß durch einen Flachdichtungsring der eingangs genannten Art gelöst, wobei der Flachdichtungsring einen elastisch verformbaren Grundring und am inneren Umfangsrand des Grundrings und/oder am äußeren Umfangsrand des Grundrings einen Versteifungsring aufweist, wobei der Versteifungsring wenigstens senkrecht zur Ringebene eine niedrigere Verformbarkeit bzw. höhere Festigkeit besitzt als der Grundring und wobei die Höhe des Versteifungsrings senkrecht zur Ringebene kleiner ist als die größte Höhe des Grundrings senkrecht zur Ringebene und wobei auf der Oberfläche des elastischen Grundrings wenigstens abschnittsweise wenigstens eine Schutzlage vorgesehen ist, die mit dem Versteifungsring einstückig aus PTFE oder einem Material, das im Hinblick auf seine chemische Beständigkeit gegen Korrosion ähnlich wie PTFE ist, hergestellt ist, dadurch gekennzeichnet ist, daß der Versteifungsring durch Spritz- oder Klebeherstellungsverfahren fest mit dem Grundring verbunden ist.

Der Grundring des erfindungsgemäßen Flachdichtungsrings besteht vollständig oder zumindest im Kern aus elastisch verformbarem Material, wobei jedes geeignete Elastomer eingesetzt werden kann. Vorzugsweise wird hierfür Gummi als Vollmaterial oder Schaumstoffmaterial eingesetzt. Das elastisch verformbare Material des Grundrings sorgt für das Rückstellvermögen der Dichtung und ein gleichmäßiges und dauerhaftes Anliegen des Flachdichtungsrings an den fluiddicht miteinander zu verbindenden Teilen.

Da das elastisch verformbare Material des Grundrings in den üblichen Einsatzbereichen für solche Flachdichtungsringe häufig nicht die Anforderungen an die chemische Beständigkeit und/oder die Anforderungen an gesundheitliche Unbedenklichkeit, zum Beispiel beim Einsatz in der Nahrungsmittelindustrie, erfüllt, ist das elastische Material des Grundrings bei einer ganz besonders vorteilhaften Ausführungsform der Erfindung wenigstens abschnittsweise auf der Oberfläche mit einer oder mehreren Schutzlagen aus einem geeigneten Material versehen. Als Schutzlage eignet sich jedes auf dem Gebiet bekannte Material, das die geforderte chemische Beständigkeit und/oder gesundheitliche Unbedenklichkeit zusammen mit der erforderlichen Eignung zur fluiddichten Abdichtung aufweist. Besonders bevorzugt ist eine Schutzlage aus PTFE. Die Schutzlage ist wenigstens überall dort über dem elastischen Material angeordnet, wo die Dichtung mit dem Fluid in Berührung kommen kann, vor dessen Durchtritt der erfindungsgemäße Flachdichtungsring schützen soll. Zweckmäßigerweise erstreckt sich die Schutzlage über die gesamte Oberseite des Grundrings, von dieser aus über die Innenfläche des Rings bis über die Unterseite des Grundrings. Alternativ kann auch das gesamte elastische Material des Grundrings von der Schutzlage umhüllt sein. Bei einer weiteren Ausführungsform sind über dem elastischen Material des Grundrings mehrere Lagen bzw. Schutzlagen schichtartig übereinander vorgesehen, wobei die äußerste, mit Fluid in Berührung kommende Lage die Eigenschaften der vorgenannten einzelnen Schutzlage aufweisen sollte.

Der erfindungsgemäß vorgesehene Versteifungsring besitzt eine niedrigere Verformbarkeit bzw. höhere Festigkeit als der Grundring, der zumindest aus dem elastischen Material und vorzugsweise darüber angeordnet einer oder mehreren Schutzlagen besteht. Bevorzugt ist der Versteifungsring aus einem harten Kunststoff, wie Polyamid, oder aus Metall hergestellt. Rostfreies bzw. korrosionsbeständiges Metall, vorzugsweise Edelstahl, ist besonders geeignet. Gleichzeitig besitzt der Versteifungsring in der Richtung senkrecht zur Ringebene, d.h. parallel zur Mittelachse des Ring, eine geringere Höhe bzw. Ausdehnung als der Grundring. Beim Einsetzen und Verpressen des erfindungsgemäßen Flachdichtungsrings werden die fluiddicht miteinander zu verbindenden Teile aufeinander zu bewegt, sei es durch Gewindeverschraubung oder Druckbewegung senkrecht zur Ringebene. Bei der Bewegung der Teile aufeinander zu kommen zunächst beide Teile mit dem Grundring in Berührung, und der Grundring wird beim Verpressen elastisch verformt, d.h. zusammengequetscht. Durch die Rückstellkraft des elastischen Materials wird dabei gewährleistet, daß der Grundring in fluiddichter Weise gleichmäßig auf den Flächen der abzudichtenden Teile zu liegen kommt. Der Versteifungsring erfüllt die Aufgabe, die Dichtungsverpressung zu begrenzen. Sobald beide zu verbindenden Teile an den Versteifungsring anliegen, können die Teile nicht weiter aufeinander zu bewegt und der elastisch verformbare Grundring nicht weiter verpreßt werden. Hierdurch wird verhindert, daß der elastisch verformbare Grundring zu stark gequetscht, gegebenenfalls seitlich herausgedrückt oder möglicherweise beschädigt wird. Der für die eigentliche Abdichtung verantwortliche elastisch verformbare Grundring wird vor Beschädigung geschützt und kann damit dauerhaft seine dichtende Funktion ausüben und auch nach mehrfachem Öffnen der Dichtung wiederverwendet werden. Der Versteifungsring gewährleistet nicht nur, daß eine zu starke, sondern auch eine zu geringe Verpressung vermieden wird, da er durch Begrenzung der Verpressung sowohl die minimale als auch die maximale Verpressung anzeigt. Die Anzugsmomente bleiben auf Dauer konstant.

Besonders bevorzugt weist der erfindungsgemäße Flachdichtungsring genau einen Versteifungsring auf, der sich entweder am inneren Umfangsrand des Grundrings oder am äußeren Umfangsrand des Grundrings erstreckt. Beim Verpressen des Flachdichtungsrings wird so gewährleistet, daß der elastisch verformbare Grundring, der beim Verpressen flacher und breiter wird, in die dem Versteifungsring entgegengesetzte Richtung ausweichen kann. Erstreckt sich der Versteifungsring am äußeren Umfangsrand des Grundrings, so kann das elastisch verformbare Material beim Verpressen in Richtung der Ringmitte entweichen und umgekehrt. Je nach Anforderungen und Ausgestaltung des elastisch verformbaren Grundrings kann es jedoch auch zweckmäßig sein, wenn zwei Versteifungsringe vorgesehen sind, einer am inneren und einer am äußeren Umfangsrand des Grundrings.

Zweckmäßigerweise ist der Versteifungsring fest oder formschlüssig mit dem Grundring verbunden. Bei einer bevorzugten Ausführungsform ist der Versteifungsring formschlüssig in das elastisch verformbare Material des Grundrings einvulkanisiert, wobei der Versteifungsring vollständig oder auch nur teilweise von dem elastischen Material umschlossen sein kann. Bei dem erfindungsgemäßen Flachdichtungsring erfolgt die Verbindung zwischen Grundring und Versteifungsring durch an sich bekannte Spritz- bzw. Klebeherstellungsverfahren, die für eine solche Verbindung geeignet sind.

Bei dem erfindungsgemäßen Flachdichtungsring ist der Versteifungsring aus dem gleichen Material hergestellt wie die über dem Grundring angeordnete Schutzlage und einstückig mit dieser ausgebildet. Das Material ist ein chemisch beständiges Material, insbesondere PTFE oder PTFE-ähnliche Materialien. Der Versteifungsring hat bei dem erfindungsgemäßen Flachdichtungsring die gleiche vorteilhafte chemische Beständigkeit gegen Korrosion, wodurch die Haltbarkeit des Versteifungsrings erheblich gegenüber anderen Materialien, wie beispielsweise einem Versteifungsring aus Metall, verbessert ist. Da die Schutzlage in der Regel als eine relativ dünne Folie ausgebildet ist, weist das Material des Versteifungsrings, der mit der Schutzlage einstückig ausgebildet ist, eine größere Materialdicke auf, um die gewünschte Höhe des Versteifungsrings zu erzielen. Für das einstückige Ausbilden von Versteifungsring und Schutzlage eignen sich besonders solche chemisch beständigen Materialien, die im wesentlichen keine oder nur geringe Kompressibilität aufweisen, um auch die mechanischen Anforderungen an den Versteifungsring zu erfüllen. PTFE ist hierfür ein geeignetes Material.

Unter die vorliegende Erfindung sollen auch Abwandlungen von dem zuvor beschriebenen Versteifungsring zählen, bei denen der Versteifungsring nicht in vollem Umfang eine niedrigere Verformbarkeit bzw. höhere Festigkeit besitzt als der Grundring. Es kann ausreichen und zur Einsparung von Material vorteilhaft sein, wenn an mehreren Stellen in Umfangsrichtung verteilt im Versteifungsring ein Material vorgesehen ist, das eine niedrigere Verformbarkeit besitzt als der Grundring. In einer weiteren alternativen Ausgestaltungsform können anstelle eines vollständigen Versteifungsrings auch nur einzelne, nicht miteinander verbundene Elemente verteilt sein, die eine niedrigere Verformbarkeit besitzen als der Grundring, aber wie der oben beschriebene Versteifungsring eine geringere Höhe als der Grundring aufweisen. Solche Elemente können Ringsegmente oder auch beispielsweise in das elastische Material des Grundrings eingegossene oder damit verbundene Platten oder Scheiben aus einem festen Material sein. Voraussetzung ist, daß diese Elemente die oben beschriebenen Funktionen des Versteifungsrings erfüllen, nämlich die Begrenzung der Verpressung beim Installieren der Dichtung.

Der Grundring des erfindungsgemäßen Flachdichtungsrings weist vorzugsweise einen sich in der Ringebene flach erstreckenden Querschnitt auf, d.h. im wesentlichen in der Form einer Ringscheibe. Besonders bevorzugt weist der Querschnitt des Grundrings wenigstens einen Wulst auf, der sich ausgehend von den im Querschnitt flachen Ober- und Unterseiten des Grundrings nach oben und unten erstreckt, d.h. in Richtung der Anlageflächen der fluiddicht miteinander zu verbindenden Teile. Der Wulst erstreckt sich in Umfangsrichtung vorzugsweise über den gesamten Umfang des Grundrings, und bei alternativen Ausgestaltungen kann es zweckmäßig sein, im Querschnitt des Grundrings zwei oder mehr Wülste vorzusehen. Durch ein oder mehrere Wülste an der Dichtfläche wird die Verpressung zusätzlich partiell erhöht, was die Dichtigkeit besonders bei ausgasenden Medien oder bei unebenen Dichtflächen verbessert.

Weitere Vorteile, Merkmale und Ausgestaltungsmöglichkeiten werden anhand der nachfolgenden Beschreibung einiger Ausführungsformen und der dazugehörigen Figuren deutlich.
Figur 1 zeigt einen erfindungsgemäßen Flachdichtungsring im Querschnitt mit Versteifungsring am äußeren Umfangsrand des Grundrings.
Figur 2zeigt einen erfindungsgemäßen Flachdichtungsring im Querschnitt mit Versteifungsring am inneren Umfangsrand des Grundrings.
Figur 3zeigt einen Flachdichtungsring im Querschnitt mit einem Versteifungsring, der nicht einstückig mit dem Material der Schutzlage ausgebildet ist, am äußeren Umfangsrand des Grundrings.
Figur 4zeigt die Verwendung des Flachdichtungsrings gemäß Figur 3 zum Abdichten des Übergangs zwischen zwei Rohrleitungsstücken.
Figur 5zeigt die Verwendung des Flachdichtungsrings in einer Flanschverbindung.
Figur 6zeigt die Verwendung des Flachdichtungsrings gemäß Figur 3 zum Abdichten eines Ventils in einer Anlage.
Figur 7zeigt die Verwendung des Flachdichtungsrings gemäß Figur 3 zum Abdichten eines Ventils in einem Pumpendosierkopf.

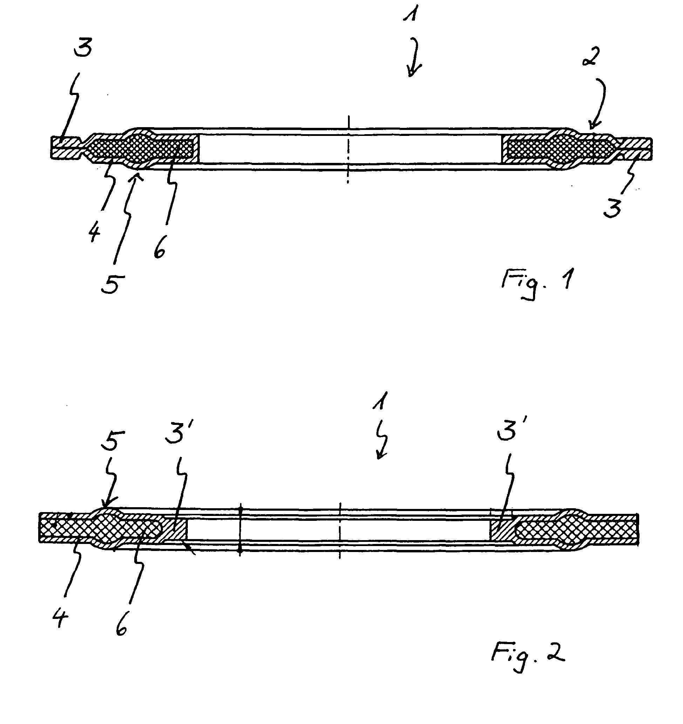

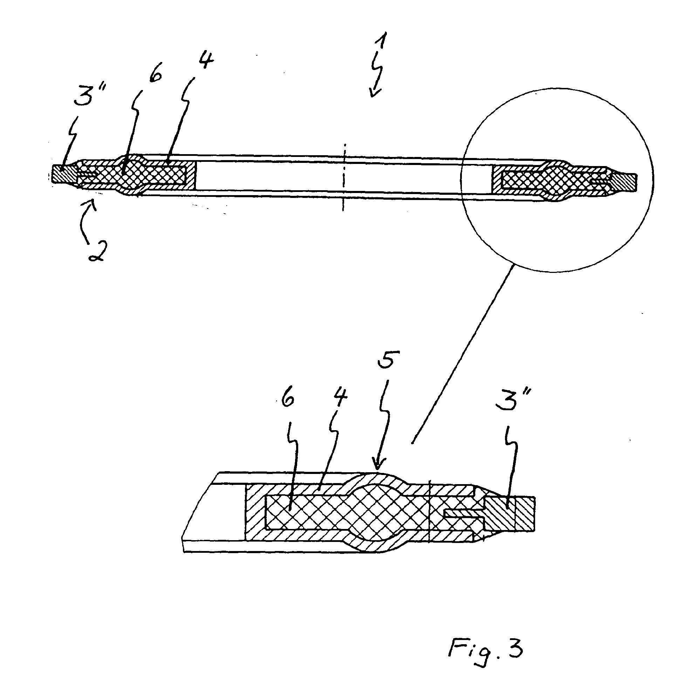

Die Figuren 1 und 2 zeigen Ausführungsformen des erfindungsgemäßen Flachdichtungsrings 1 mit jeweils einem Grundring 2 und jeweils einem Versteifungsring 3 bzw. 3', wobei sich bei der Ausführungsvariante gemäß Figur 1 der Versteifungsring 3 am äußeren Umfangsrand des Grundrings 2 erstreckt. Bei der Ausführungsvariante gemäß Figur 2 erstreckt sich der Versteifungsring 3' am inneren Umfangsrand des Grundrings 2. Der Grundring 2 aller Ausführungsformen der Figuren 1, 2 und 3 besteht aus einem elastisch verformbaren Material 6, das wenigstens teilweise von einer Schutzlage 4 umhüllt ist. Die Schutzlage 4 besteht zweckmäßigerweise aus einer PTFE-Folie, die das elastisch verformbare Material 6 vor einem Angriff durch chemisch aggressives Fluid schützt. Die Grundringe 2 der in den Figuren 1, 2 und 3 dargestellten Flachdichtungsringe weisen jeweils eine umlaufende Wulst 5 auf, die im Querschnitt des Grundrings als Erhebungen nach oben und unten von der ansonsten flachen Oberfläche dargestellt sind.

Bei dem Flachdichtungsring gemäß Figur 1 ist das elastisch verformbare Material 6 des Grundrings 2 vollständig von der Schutzlage 4 umhüllt, und die Schutzlage 4 geht am äußeren Umfang des Rings in den Versteifungsring 3 über. Der Versteifungsring 3 kann hierbei aus dem gleichen Material hergestellt sein wie die Schutzlage 4. Der Versteifungsring 3 ist in axialer Richtung mittig zum Grundring 2 angeordnet und weist in axialer Richtung eine geringere Höhe als der Grundring 2 auf.

Bei der Ausführungsvariante gemäß Figur 2 erstreckt sich der Versteifungsring 3' am inneren Umfangsrand des Grundrings 2 und ist ebenfalls wie bei dem Dichtungsring gemäß Figur 1 einstückig mit dem Material der Schutzlage 4 ausgebildet. Die Schutzlage 4 ist auf der Ober- und Unterseite des Grundrings 2 vorgesehen und erstreckt sich um die Innenfläche des Grundrings 2 herum. Der äußere Rand des Grundrings 2, der nicht mit Fluid in Berührung kommen kann, ist nicht von der Schutzlage 4 überdeckt.

Bei dem Dichtungsring gemäß Figur 3 ist der Versteifungsring 3" am äußeren Umfangsrand des Grundrings 2 vorgesehen, jedoch ist er anders als bei den erfindungsgemäßen Flachddichtungsringen gemäß den Figuren 1 und 2 nicht einstückig mit dem Material der Schutzlage 4 ausgebildet. Bei dem Flachdichtungsring gemäß Figur 3 besteht der Versteifungsring 3" aus hartem Kunststoff oder Metall und ist formschlüssig in das elastisch verformbare Material 6 des Grundrings 2 eingebettet.

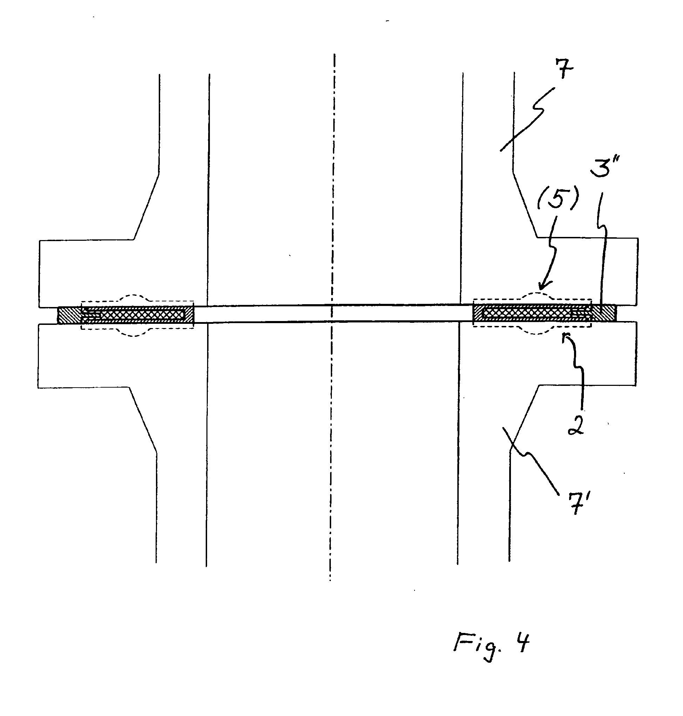

Figur 4 zeigt den Einbau des Flachdichtungsrings gemäß Figur 3 zwischen den Verbindungsenden zweier Rohrstücke 7 und 7', wobei in Figur 4 die ursprüngliche nicht verpreßte Grundform des Flachdichtungsrings bzw. des Grundrings 2 davon durch gestrichelte Linien dargestellt ist. Es ist deutlich erkennbar, daß der Grundring 2 mit dem im nicht verpreßten Zustand vorhandenen Wulst 5 im nicht verpreßten Zustand deutlich höher ist als im verpreßten Zustand. Im verpreßten Zustand nimmt der Grundring 2 genau die gleiche Höhe ein wie der die Verpressung begrenzende Versteifungsring 3".

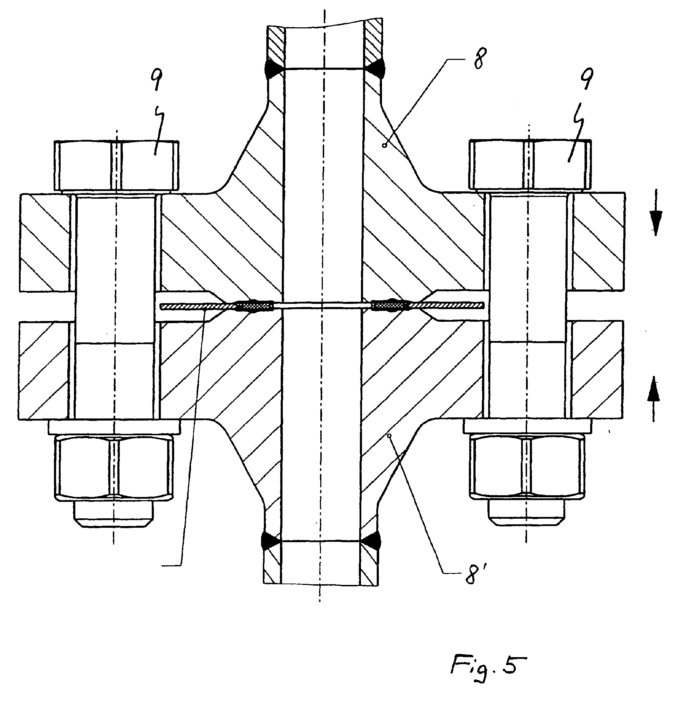

Die Figuren 5, 6 und 7 zeigen Beispiele für die Verwendung des Flachdichtungsrings. Gemäß Figur 5 ist der Flachdichtungsring in einem Flansch eingesetzt, bestehend aus zwei zu verbindenden Rohrstücken 8 und 8' und Bolzen 9. Beim Herstellen der Dichtung werden die Rohrstücke 8 und 8' durch Verschrauben der Bolzen in Richtung der beiden dargestellten Pfeile aufeinander zu bewegt und der Flachdichtungsring genau in axialer Richtung verpreßt.

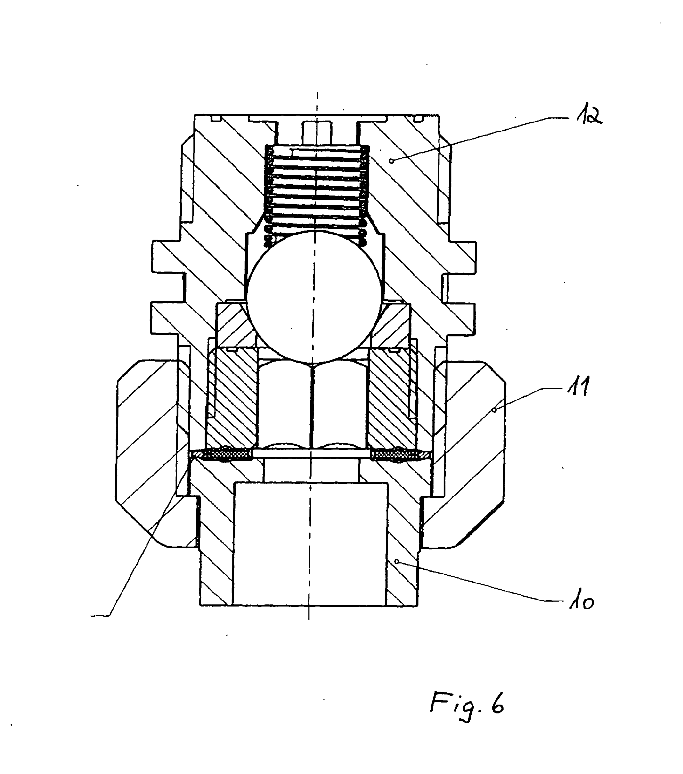

Figur 6 zeigt die Verwendung des Flachdichtungsrings gemäß Figur 3 zur fluiddichten Verbindung zwischen einem Fluidanschlußstück 10 und einem Ventilkörper 12 mittels einer Schraubverbindung durch die Mutter 11. Auch hier erfolgt das Verpressen des Fluiddichtungsrings in axialer Richtung zum Ring, wenn das Fluidanschlußstück 10 und der Ventilkörper 12 durch Anziehen der Mutter 11 aufeinander zu bewegt werden.

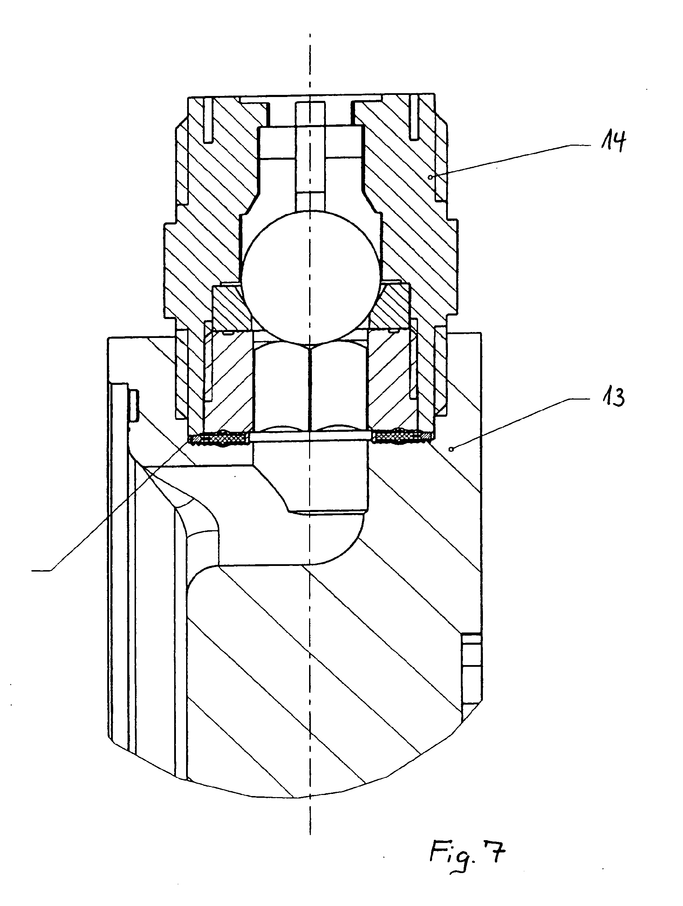

Figur 7 zeigt die Verwendung des Flachdichtungsrings für das fluiddichte Verbinden eines Pumpendosierkopfs 13 mit einem Ventil 14. Hier erfolgt das Verpressen und das Aufeinanderzubewegen der abzudichtenden Flächen zwischen Pumpendosierkopf 13 und Ventil 14 durch Einschrauben des Ventils 14 und somit durch eine Drehbewegung um die Achse des Rings.

## Patentansprüche

1. Flachdichtungsring (1) für die Herstellung einer fluiddichten Verbindung von zwei mit einer Anpreßkraft gegeneinander abzudichtenden Flächen, wobei der Ring (1) einen elastisch verformbaren Grundring (2) und am inneren Umfangsrand des Grundrings (2) und/oder am äußeren Umfangsrand des Grundrings (2) einen Versteifungsring (3, 3', 3") aufweist, wobei der Versteifungsring wenigstens senkrecht zur Ringebene eine niedrigere Verformbarkeit bzw. höhere Festigkeit besitzt als der Grundring (2) und wobei die Höhe des Versteifungsrings senkrecht zur Ringebene kleiner ist als die größte Höhe des Grundrings (2) senkrecht zur Ringebene und wobei auf der Oberfläche des elastischen Grundrings wenigstens abschnittsweise wenigstens eine Schutzlage (4) vorgesehen ist, die mit dem Versteifungsring (3, 3', 3") einstückig aus PTFE oder einem Material, das im Hinblick auf seine chemische Beständigkeit gegen Korrosion ähnlich wie PTFE ist, hergestellt ist, **dadurch gekennzeichnet, daß** der Versteifungsring durch Spritz- oder Klebeherstellungsverfahren fest mit dem Grundring verbunden ist.

2. Flachdichtungsring nach Anspruch 1, **dadurch gekennzeichnet, daß** sowohl am äußeren als auch am inneren Umfangsrand des Grundrings (2) jeweils ein Versteifungsring (3, 3',3"), vorgesehen ist.

3. Flachdichtungsring nach einem der Ansprüche 1 oder 2, **dadurch gekennzeichnet, daß** der Versteifungsring oder die Versteifungsringe (3, 3', 3") aus Kunststoff oder Metall, vorzugsweise aus nicht rostendem Metall, besonders bevorzugt aus Edelstahl hergestellt ist.

## Claims

1. Flat sealing ring (1) for producing a fluid-tight coupling of two surfaces which are to be sealed against one another by means of a contact force, the ring (1) having an elastically deformable base ring (2), and, at the inner circumferential edge of the base ring (2), and/or at the outer circumferential edge of the base ring (2), a stiffening ring (3, 3', 3"), wherein the stiffening ring, at least perpendicularly to the ring plane, has a lesser deformability, or greater firmness, than the base ring (2), and wherein the height of the stiffening ring perpendicularly to the ring plane is less than the greatest height of the base ring (2) perpendicularly to the ring plane, and wherein on the surface of the elastic base ring there is provided, at least in portions, a protective layer (4), which is produced as a single piece with the stiffening ring (3, 3', 3") from PTFE or a material which is similar to PTFE in terms of its chemical stability against corrosion, **characterised in that** the stiffening ring is joined to the base ring, in a firm manner, by injection moulding or adhesion production methods.

2. Flat sealing ring according to claim 1, **characterized in that** a respective stiffening ring (3, 3', 3") is provided both at the outer, as well as at the inner, circumferential edge of the base ring (2).

3. Flat sealing ring according to one of claims 1 or 2, **characterized in that** the stiffening ring or stiffening rings (3, 3', 3") are produced from plastic or metal, preferably from non-rusting metal, particularly preferably from stainless steel.

## Revendications

1. Bague d'étanchéité plane (1) permettant de relier de façon étanche aux fluides deux surfaces qui doivent coopérer de façon étanche l'une avec l'autre en exerçant une force de pression, la bague (1) comportant une bague de base (2) déformable élastiquement et une bague de renforcement (3, 3', 3") au niveau du bord périphérique intérieur de la bague de base (2) et/ou au niveau du bord périphérique extérieur de la bague de base (2), la bague de renforcement présentant, au moins perpendiculairement au plan de la bague, une déformabilité plus faible respectivement une rigidité plus élevée que la bague de base (2), et la hauteur de la bague de renforcement perpendiculairement au plan de la bague étant inférieure à la plus grande hauteur de la bague de base (2) perpendiculairement au plan de la bague, et au moins une couche de protection (4), qui est réalisée d'une seule pièce avec la bague de renforcement (3, 3', 3") à partir de PTFE ou d'un matériau qui est similaire au PTFE quant à sa résistance chimique à la corrosion, étant disposée au moins par portion sur la surface de la bague de base élastique, **caractérisé en ce que** la bague de renforcement est reliée de manière fixe à la bague de base par un procédé de fabrication par injection ou collage.

2. Bague d'étanchéité plane selon la revendication 1, **caractérisée en ce qu'**une bague de renforcement (3, 3', 3") est disposée à chaque fois aussi bien au niveau du bord périphérique extérieur qu'au niveau du bord périphérique intérieur de la bague de base (2).

3. Bague d'étanchéité plane selon l'une des revendications 1 ou 2, **caractérisée en ce que** la bague de renforcement ou les bagues de renforcement (3, 3', 3") sont réalisées à partir d'une matière plastique ou d'un métal, avantageusement d'un métal inoxydable, de façon particulièrement préférée d'un acier fin.
